# EUROPÄISCHE PATENTSCHRIFT

(11) **EP 1 204 619 B1**
(45) Veröffentlichungstag und Bekanntmachung des Hinweises auf die Patenterteilung: **23.04.2003**
(21) Anmeldenummer: 00947792.8
(22) Anmeldetag: 07.06.2000
(51) Int. Cl.: C04B 35/443, C04B 35/05, C04B 35/053, C04B 35/653, C04B 41/45, C23C 4/10, C01F 7/16

(54) **KERAMISCHER WERKSTOFF, VERFAHREN, VERWENDUNG UND SCHICHT**
CERAMIC MATERIAL, METHOD FOR THE PRODUCTION THEREOF, USE OF THE CERAMIC MATERIAL, AND A LAYER OF THE CERAMIC MATERIAL ON A METALLIC BODY
MATIERE CERAMIQUE, SON PROCEDE DE PRODUCTION, SON UTILISATION, ET COUCHE DE MATIERE CERAMIQUE DEPOSEE SUR UN CORPS METALLIQUE

(30) Priorität: 24.06.1999 DE 19928983
(43) Veröffentlichungstag der Anmeldung: 15.05.2002
(73) Patentinhaber: SIEMENS AKTIENGESELLSCHAFT, 80333 München (DE)
(72) Erfinder: JANSING, Thomas, D-90425 Nürnberg (DE); DECKER, Jens, D-59619 Rheinbreitbach (DE); SCHÜRHOLT, Günter, D-53127 Bonn (DE)
(86) Internationale Anmeldenummer: DE0001848
(87) Internationale Veröffentlichungsnummer: WO01000539

(56) Entgegenhaltungen:
- FR-A- 2 286 119
- LALLEMAND G ET AL: "Fabrication process of spinel powder for plasma spraying" JOURNAL OF THE EUROPEAN CERAMIC SOCIETY,GB,ELSEVIER SCIENCE PUBLISHERS, BARKING, ESSEX, Bd. 18, Nr. 14, 1. Dezember 1998 (1998-12-01), Seiten 2095-2100, XP004144421 ISSN: 0955-2219

## Beschreibung

Aus dem "Journal of the European Ceramic Society", GB, Elsevier Science Publishers, Band 18, Nr. 14, 1998, Seite 2095 bis 2100, XP004144421 ISSN: 0955-2219 ist die Herstellung von spinellförmigen MgAl₂O₄ bekannt, bei dem MgO nur als Ausgangsmaterial verwendet wird. Das so hergestellte Puvler wird mittels Thermischen Spritzen aufgetragen.

Die Erfindung betrifft einen keramischen Werkstoff für die Anwendung in verschiedenen Beschichtungstechnologien, wie beispielsweise den unterschiedlichen Varianten des Thermischen Spritzens. Weiter bezieht sich die Erfindung auf ein Verfahren zur Herstellung eines solchen keramischen Werkstoffes. Ferner betrifft die Erfindung eine Verwendung des keramischen Werkstoffs, sowie eine Schicht aus dem keramischen Werkstoff auf einem metallischen Körper.

Verschiedene Varianten des Thermischen Spritzens sind Flammspritzen, Plasmaspritzen, Hochgeschwindigkeitsspritzen, Detonationsspritzen, sowie Beschichten mittels Laser oder Pulverplasmaauftragsschweißen. Mittels dieser Verfahren werden hochbeanspruchte Bauteile beschichtet, die abrasivem oder erosivem Verschleiß, Korrosion, hohen Temperaturen oder unterschiedlichsten Kombinationen dieser Beanspruchungen ausgesetzt sind. Solche Bauteile finden Anwendung beispielsweise im Fahrzeugbau, im Maschinenbau, in der Energietechnik, in chemischen oder petrochemischen Anlagen und vielen anderen Wirtschaftszweigen.

Bei dem Verfahren des Thermischen Spritzens wird schmelzbares Material wie Metall oder Keramik durch Erhitzen erweicht oder aufgeschmolzen und gegen eine zu beschichtende Oberfläche geschleudert. Die erhitzten Partikel des Materials treffen auf die Oberfläche, auf der sie abkühlen und dadurch an ihr haften bleiben. Das Erhitzen des zu spritzenden Materials wie auch das Beschleunigen des erhitzten Materials zur Oberfläche hin findet gewöhnlich in einer Spritzpistole für Thermisches Spritzen statt. Das zu erhitzende Material wird der Spritzpi stole in Pulverform zugeführt. Die mittlere Korngröße eines solchen Pulvers liegt gewöhnlicherweise zwischen 2 µm und 150 µm.

Das Pulver wird in der Spritzpistole durch einen Gasstrom beschleunigt. Dieses Gas ist in der Regel eines der Betriebsgase der Spritzpistole, die die Verbrennungs- oder Plasmaflamme in der Spritzpistole erzeugen. Für eine Plasmaspritzpistole sind solche Betriebsgase gewöhnlicherweise Stickstoff oder Argon zum einen und Helium zum anderen. Hierbei dient der Stickstoff oder das Argon gleichzeitig als Transportgas für das Pulver.

Verschiedene keramische oder hartmetallähnliche Werkstoffe finden als Beschichtungspulver für das Thermische Spritzen breite Anwendung in der Technik. Ein keramischer Werkstoff wird besonders dann eingesetzt, wenn das zu beschichtende Bauteil gegen Korrosion oder thermische Einflüsse geschützt werden soll. Beispielhaft hierfür ist der Schutz gegen Benetzung von metallischen oder oxidischen Schmelzen. Gerade bei solchen Bauteilen tritt das Problem auf, daß in der keramischen Beschichtung bei thermischen Belastungen hohe mechanische Spannungen entstehen. Sie führen leicht zu Rissen in der Beschichtung oder zu einem Lösen der Beschichtung vom beschichteten Bauteil. Mechanische Spannung tritt dann auf, wenn der thermische Ausdehnungskoeffizient des keramischen Beschichtungswerkstoffes erheblich vom thermischen Ausdehnungskoeffizienten des Materials des Bauteils abweicht. Daher ist bevorzugt ein Werkstoff für das Thermische Spritzen zu wählen, der einen ähnlichen thermischen Ausdehnungskoeffizient aufweist wie das Material, aus dem das zu beschichtende Bauteil besteht.

Für die Beschichtung eines metallischen Bauteils ist besonders ein solcher keramischer Werkstoff geeignet, dessen thermischer Ausdehnungskoeffizient im Bereich desjenigen des Metalls liegt. Da Metalle in der Regel einen thermischen Ausdehnungskoeffizienten aufweisen, der größer als 10*10⁻⁶/K ist, können nur wenige Oxide für Beschichtungszwecke eingesetzt werden. Ein bevorzugter Spritzwerkstoff ist Zirkonoxid, welches mit einer Stabilisierung von 7 bis 9 Gew.-% Yttriumoxid beispielsweise in Verbrennungskraftmaschinen eingesetzt wird. Der thermische Ausdehnungskoeffizient solcher Zirkonoxidschichten liegt im Bereich um 11*10⁻⁶/K. Hinsichtlich der Resistenz gegenüber dem Angriff metallischer oder oxidischer Schmelzen ist Zirkonoxid jedoch einigen anderen Werkstoffen unterlegen.

Eine befriedigende Resistenz gegenüber Schmelzen zeigt MgO, das mit einem thermischen Ausdehnungskoeffizienten von 13,6*10⁻⁶/K auch ein geeignetes Beschichtungsmaterial für Metalle ist. MgO ist jedoch kein geeigneter Werkstoff für die Verwendung in einem Verfahren des Thermischen Spritzens, da MgO bei den dort auftretenden hohen Temperaturen zerfällt und die Zerfallsprodukte flüchtig sind.

Gute Eigenschaften für die Verwendung in Verbindung mit verschiedenen Metallen zeigen Keramiken, die aus einer Mischung aus MgO und Al₂O₃ hergestellt sind. Aus MgO und Al₂O₃ gesinterte Keramiken sind im Handel erhältlich. Sie weisen die Vorzüge auf, daß sie sehr resistent gegen chemische, thermische und mechanische Angriffe sind, und einen thermischen Ausdehnungskoeffizient haben, der im Bereich um 11*10⁻⁶/K liegt. Solche Keramiken sind allerdings nur sehr begrenzt als Beschichtungswerkstoff einsetzbar, da sie praktisch nicht geeignet sind für die Beschichtung mittels eines Verfahrens des Thermischen Spritzens. Auch bei diesen Keramiken verdampft das MgO der Keramik bei den beim Thermischen Spritzen auftretenden hohen Temperaturen.

Aufgabe der Erfindung ist es, einen beständigen keramischen Werkstoff anzugeben, der für eine Beschichtung mittels eines Verfahrens des Thermischen Spritzens geeignet ist, und der einen an ein Metall angepaßten thermischen Ausdehnungskoeffizienten aufweist. Weiter ist es Aufgabe der Erfindung, ein Verfahren zur Herstellung eines solchen Werkstoffes anzugeben. Des weiteren ist es die Aufgabe der Erfindung, eine Verwendung des keramischen Werkstoffs anzugeben. Ferner hat sich die Erfindung die Aufgabe gestellt, eine Schicht auf einem metallischen Körper anzugeben, die thermischen Belastungen standhält.

Die erstgenannte Aufgabe wird durch einen keramischen Werkstoff gelöst, der erfindungsgemäß 10 bis 95 Gew.-% MgAl₂O₄, 5 bis 90 Gew.-% MgO, bis zu 20 Gew.-% Al₂O₃, sowie einen Rest an üblichen Verunreinigungen umfaßt, und der Körner aus MgO mit einem mittleren Durchmesser von 0,1µm bis 10µm aufweist, die in eine Matrix aus spinellförmigem MgAl₂O₄ eingebettet sind.

Die Erfindung geht von der Überlegung aus, daß sich, anders als bei einer Sinterkeramik aus MgO und Al₂O₃, in der MgO und Al₂O₃ nebeneinander vorliegen, in einer Verbindung von MgO und Al₂O₃ das Verdampfen von MgO beim Thermischen Spritzen verhindern oder starkt einschränken läßt. Eine solche Verbindung ist beispielsweise MgAl₂O₄. Diese Verbindung oder Keramik erwies sich in einer Anzahl von Versuchen als geeigneter Werkstoff für ein Thermisches Spritzverfahren. Außerdem ist sie chemisch und mechanisch sehr stabil. Der Nachteil einer solchen Keramik ist ihr niedriger thermischer Ausdehnungskoeffizient von etwa 8,5*10⁻⁶/K, der niedriger ist, als der der meisten Metalle.

Des weiteren geht die Erfindung von der Überlegung aus, daß MgO einen thermischen Ausdehnungskoeffizienten von etwa 13,6*10⁻⁶/K hat. Das Einbringen von MgO in MgAl₂O₄ führt daher zu einer Erhöhung des thermischen Ausdehnungskoeffizienten des entstehenden keramischen Werkstoffs. Je nach Zugabemenge von MgO läßt sich der thermische Ausdehnungskoeffizient definiert einstellen und gezielt an den thermischen Ausdehnungskoeffizient des zu beschichtenden Metalls anpassen, mindestens jedoch die Differenz zwischen den Ausdehnungskoeffizienten verringern.

In einem dritten Schritt geht die Erfindung von der Überlegung aus, daß das MgO in der Weise in den keramischen Werkstoff eingebunden werden muß, daß es in der heißen Flamme der Spritzpistole zum Thermischen Spritzen nicht zerfällt oder sublimiert. Eine solche Einbindung liegt dann vor, wenn der Werkstoff Bereiche aus MgO aufweist, die in eine Matrix aus MgAl₂O₄ eingebettet sind. Das innerhalb solcher Bereiche, die auch als Körner bezeichnet werden können, vorliegende MgO ist von MgAl₂O₄ umschlossen. Vorzugsweise liegt das MgAl₂O₄ als homogene Matrix vor, die nicht aus zusammengesinterten MgAl₂O₄-Körnern mit dazwischenliegenden Freiräumen besteht, sondern aus homogenem, porenfreiem MgAl₂O₄. Dieses MgAl₂O₄ ist thermisch ausreichend stabil, um die das MgO umschließende Hülle auch während des Vorgangs des Thermischen Spritzens zu bewahren. Auf diese Weise bleibt der Bereich des MgO während des Thermischen Spritzens umschlossen und das MgO kann nicht sublimieren oder verdampfen.

Der keramische Werkstoff weist im Bereich zwischen 0°C und 1000°C einen thermischen Ausdehnungskoeffizienten von 8,5*10⁻⁶/K bis 13*10⁻⁶/K auf. Nach einem Aufbringen des keramischen Werkstoffs als eine Schicht auf einen metallischen Körper, beispielsweise durch Thermisches Spritzen, besitzt der Werkstoff einen vorgegebenen thermischen Ausdehnungskoeffizienten. Dieser Ausdehnungskoeffizient kann vom Ausdehnungskoeffizienten des Werkstoffs vor dem Spritzen abweichen. Der Ausdehnungskoeffizient des Werkstoffs der aufgespritzten Schicht ist angepaßt an den Ausdehnungskoeffizienten des zu beschichtenden metallischen Bauteils. Diese Anpassung bewirkt, daß im Falle, daß das Bauteil hohen Temperaturschwankungen ausgesetzt ist, kaum Spannungen zwischen Beschichtung und beschichtetem Untergrund entstehen. Hierdurch wird vermieden, daß die Beschichtung durch Temperaturschwankungen hervorgerufenen großen mechanischen Belastungen ausgesetzt ist und sich beispielsweise vom Untergrund löst oder Risse bildet.

Durch die Erfindung ist der besondere Vorteil erzielbar, daß der thermische Ausdehnungskoeffizient einer durch Thermisches Spritzen hergestellten Beschichtung an den thermischen Ausdehnungskoeffizient des beschichteten Materials angepaßt werden kann. Diese Anpassung geschieht durch die Wahl des Anteils an MgO am Stoffgemisch des keramischen Werkstoffs.

Durch die Anpassung des thermischen Ausdehnungskoeffizienten lassen sich gezielt Spannungen innerhalb des so entstandenen Schichtverbundwerkstückes reduzieren. Hierdurch kann die Thermoschockbeständigkeit und die Schichthaftung unter zyklischer Temperaturbeanspruchung positiv beeinflußt werden. Ferner weist der erfindungsgemäße keramische Werkstoff eine hohe Resistenz gegenüber aggressiven Schmelzen oder basischen Schlacken auf, wie sie in der Nichteisen-Metallurgie vorkommen. Des weiteren weist eine Beschichtung aus dem erfindungsgemäßen Werkstoff auch bei hoher thermischer Belastung keine relevante Alterung, beispielsweise durch Destabilisierung oder Modifikationswechsel der Struktur, auf. Eine solche Beschichtung läßt sich kaum von flüssigem Aluminium oder Zink benetzen. Und sie hat aufgrund ihrer weißen Farbe einen niedrigen Strahlungskoeffizienten. Eine Beschichtung aus dem erfindungsgemäßen Werkstoff hat außerdem einen hohen elektrischen Widerstand. Sie ist somit auch als Isolator geeignet.

In vorteilhafter Ausgestaltung der Erfindung weisen die in eine Matrix aus MgAl₂O₄ eingebetteten Körner aus MgO einen mittleren Durchmesser von 0,1µm bis 2µm auf. Diese Korngröße wirkt sich besonders vorteilhaft auf die Spritzfähigkeit des keramischen Werkstoffs aus.

Zweckmäßigerweise liegt das MgAl₂O₄ in Spinellform vor. MgAl₂O₄ in einer solchen Struktur eignet sich besonders für das Thermische Spritzen und ist besonders resistent gegen chemische und mechanische Angriffe.

Vorteilhafterweise enthält der keramische Werkstoff 55 bis 80 Gew.-% MgO. Ein solcher Werkstoff weist je nach Menge an MgO einen thermischen Ausdehnungskoeffizienten auf, der bei 1000°C zwischen 11,4 und 11,8*10⁻⁶K⁻¹ liegt. Der thermische Ausdehnungskoeffizient von Eisen und vielen Eisen- oder Stahllegierungen nur geringfügig oberhalb dieses Bereiches. Daher ist ein solcher Werkstoff besonders geeignet als Beschichtung solcher Legierungen.

In weiterer Ausgestaltung der Erfindung umfaßt der Werkstoff zusätzlich mindestens ein Oxid aus der Gruppe, welche CaO, SiO₂, ZrO₂ und Fe₂O₃ enthält. Diese Materialien wirken sich als Zusatzstoffe günstig auf die Materialeigenschaften des Werkstoffs aus.

Die zweitgenannte Aufgabe wird durch ein Verfahren zur Herstellung eines keramischen Werkstoffes gelöst, bei dem erfindungsgemäß MgO und Al₂O₃ als Ausgangsmaterialien zu einer flüssigen Phase aufgeschmolzen werden, dann die flüssige Phase durch Abkühlung zum Erstarren gebracht wird, und die erstarrte Phase zu einem Pulver des keramischen Werkstoffs gemahlen wird.

Dabei wird 26 Gew.-% bis 96 Gew.-% MgO in den Ausgangsmaterialien verwendet. Durch die definierte Zugabemenge an MgO in die Ausgangsstoffe besteht die Möglichkeit, den thermischen Ausdehnungskoeffizienten des herzustellenden keramischen Werkstoffs auf einen vorgegebenen Wert einzustellen. Dieser Wert liegt zwischen 8,5*10⁻⁶/K und 13*10⁻⁶/K. Hierdurch ist der Ausdehnungskoeffizient des Werkstoffs in der Beschichtung an den Ausdehnungskoeffizienten eines zu beschichtenden metallischen Materials anpaßbar.

Beim Aufschmelzen bildet sich MgAl₂O₄ und, wenn genügend MgO in den Ausgangsstoffen vorhanden ist, freies MgO. Dieses MgO liegt in der flüssigen Phase homogen verteilt vor. Beim Erstarren der flüssigen Phase bilden sich Bereiche, in denen bevorzugt MgO vorliegt und die in eine Matrix aus MgAl₂O₄ eingebettet sind. Durch dieses erfindungsgemäße Verfahren wird ein keramischer Werkstoff hergestellt, der die oben beschriebenen Vorteile aufweist.

In vorteilhafter Ausgestaltung der Erfindung werden die Ausgangsmaterialien der Keramik in einem Lichtbogenofen geschmolzen. Ein solcher Ofen ist besonders geeignet für das Aufschmelzen der keramischen Ausgangsmaterialien.

Mit Vorteil werden die Ausgangsmaterialien MgO und Al₂O₃ vor dem Schmelzen homogen miteinander vermischt. Dies geschieht beispielsweise, indem die Ausgangsstoffe in eine Suspension gebracht und homogenisiert werden, und anschließend granuliert, beispielsweise sprühgetrocknet werden. Eine Vermischung wird auch erreicht, indem die Ausgangsmaterialien als Pulver vorliegen und mechanisch gemischt werden.

Die Aufgabe bezüglich der Verwendung wird erfindungsgemäß dadurch gelöst, daß der wie oben beschriebene keramischer Werkstoff als ein Spritzpulver für Thermisches Spritzen verwendet wird. Der Werkstoff dissoziiert beim Thermischen Spritzen nicht oder nur unwesentlich. Ferner bildet der Werkstoff durch das Thermische Spritzen eine an dem zu beschichtenden Bauteil fest haftende Beschichtung, die sich durch besondere Stabilität gegen thermische, chemische oder mechanische Angriffe auszeichnet. Besonders hervorzuheben ist, daß der thermische Ausdehnungskoeffizient eines solchen Werkstoffs durch die Wahl der Werkstoffzusammensetzung an den thermischen Ausdehnungskoeffizienten des Materials des zu beschichtenden Bauteils angepaßt werden kann.

Mit Vorteil wird der keramische Werkstoff als eine, beispielsweise durch Thermisches Spritzen erzeugte, Beschichtung in der Nichteisen-Metallurgie verwendet. Eine solche Beschichtung aus dem erfindungsgemäßen Werkstoff, insbesondere auf einem Teil eines Werkzeugs aus der Nichteisen-Metallurgie, ist besonders geeignet für den Einsatz z.B. in einer Bandverzinkungs- oder Aluminiumbeschichtungsanlage, für Meßsonden, Blaslanzenköpfe oder auch für Werkzeuge für den Aluminium- oder Magnesiumguß.

Ein weiterer Vorteil der Erfindung wird erreicht, indem ein wie oben beschriebener keramischer Werkstoff für das Beschichten einer Oberfläche eines Bauteils einer Hochtemperatur-Brennstoffzelle mittels Thermischen Spritzens verwendet wird. Bauteile einer Hochtemperatur-Brennstoffzelle, die im Temperaturbereich zwischen 850°C und 1000°C betrieben wird, sind hohen thermischen Belastungen ausgesetzt. Außerdem kommen solche Bauteile mit chemisch aggressiven Betriebsgasen der Hochtemperatur-Brennstoffzelle in Berührung. Die oben genannten Vorteile des keramischen Werkstoffs, die auch einer Beschichtung aus dem Werkstoff zu eigen sind, kommen daher in einer Hochtemperatur-Brennstoffzelle besonders zum tragen.

Die letztgenannte Aufgabe wird durch eine den keramischen Werkstoff umfassende Schicht auf einem metallischen Körper gelöst, der einen vorgegebenen thermischen Ausdehnungskoeffizienten besitzt, wobei die Menge des MgO im keramischen Werkstoff so gewählt ist, daß der Werkstoff nach der Beschichtung des Körpers denselben thermischen Ausdehnungskoeffizienten besitzt wie der Körper.

Eine solche Schicht bildet auch bei starker thermischer Beanspruchung wegen dem angepaßten thermischen Ausdehnungskoeffizienten keine Spannungsrisse, da die Spannung innerhalb des so entstandenen Schichtverbundwerkstückes auf ein Minimum reduziert ist. Hierdurch ist die Schicht thermoschockbeständig und auf dem metallischen Körper fest haftend.

Ausführungsbeispiele der Erfindung werden anhand der folgenden Versuche und anhand von zwei Figuren näher erläutert. Es zeigen:
- FIG 1: ein Pulverkorn aus dem erfindungsgemäßen keramischen Werkstoff;
- FIG 2: ein Ablaufdiagramm eines Verfahrens zum Herstellen eines keramischen Werkstoffs;
- FIG 3: eine vereinfachte Darstellung des Spritzens des keramischen Werkstoffs durch ein Verfahren des Thermischen Spritzens.

In mehreren Versuchen wurde ein etwa 68 Gew.-% MgO und etwa 32 Gew.-% Al₂O₃ umfassender keramischer Werkstoff es in einer bis zu 20.000°C heißen Plasmaflamme gespritzt. Die Versuche haben gezeigt, daß es beim Thermischen Spritzen des keramischen Werkstoffs zur teilweisen Dissoziation von freiem MgO kommt. So wurde beispielsweise in einem Spritzversuch eine Abdampfrate während des Thermischen Spritzens von 5 Gew.-% MgO ermittelt. Durch eine Reduzierung der Leistung der Plasmaflamme konnte die Abdampfrate auf etwa 3 Gew.-% reduziert werden.

In weiteren Versuchen wurde die Spritzbarkeit des erfindungsgemäßen keramischen Werkstoffs untersucht. Die Versuche führten zu dem Ergebnis, daß der Werkstoff als Spritzwerkstoff für Thermisches Spritzen gut verarbeitbar ist und zu guten Spritzergebnissen führt. Die Anbindung der gespritzten Beschichtung an einen darunterliegenden Haftgrund ist sehr gut. Spannungsbedingte Risse sind auch nach hoher thermischer Belastung des beschichteten Bauteils nicht erkennbar. Dies ist auf die gute Anpaßbarkeit des thermischen Ausdehnungskoeffizienten des keramischen Werkstoffs an den des beschichteten Bauteils zurückzuführen.

Mehrere Mineralphasenanalysen des erfindungsgemäßen keramischen Werkstoffs haben gezeigt, daß im Werkstoff vor dem Thermischen Spritzen neben MgAl₂O₄ auch freies MgO vorhanden ist. Nach dem Thermischen Spritzen ist im Röntgenbeugungsdiagramm nur MgO zu erkennen. Dies liegt an der röntgenamorphen Struktur des MgAl₂O₄ direkt nach dem Spritzen. Erst nach einer Temperung, beispielsweise 1 Stunde bei 950°C, wird MgAl₂O₄ durch sein Kristallwachstum röntgenografisch erkennbar.

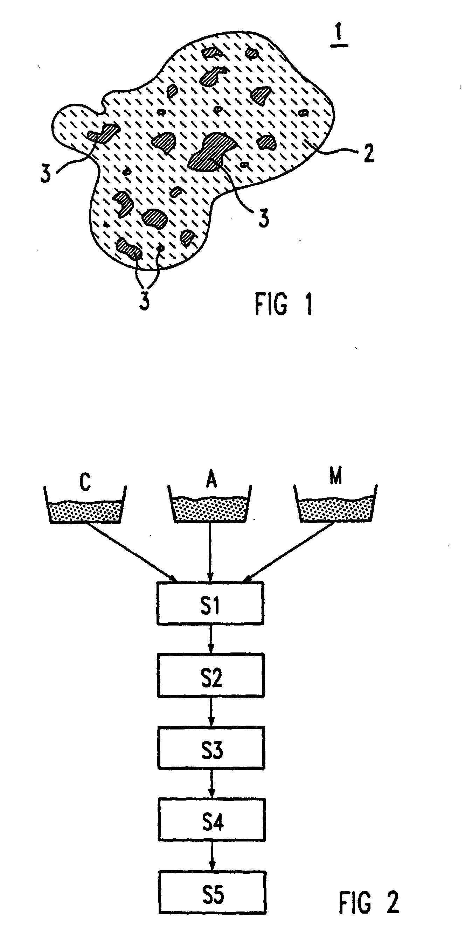

Figur 1 zeigt ein Pulverkorn aus einem keramischen Werkstoff 1, der 40 Gew.% MgAl₂O₄, 58 Gew.% MgO, 1 Gew.% Al₂O₃, sowie einen Rest an üblichen Verunreinigungen umfaßt. In einer Matrix 2 aus spinellfömigem MgAl₂O₄ sind Bereiche oder Körner 3 aus nicht im Spinell gebundenem MgO enthalten. Die eingebetteten Körner 3 weisen einen mittleren Durchmesser von 0,5 µm auf.

Ein solcher in Pulverform vorliegender Werkstoff 1 eignet sich besonders gut zum Thermischen Spritzen. Eine aus dem Werkstoff 1 hergestellte Beschichtung, beispielsweise auf einem metallischen Bauteil, weist bei 1000°C einen thermischen Ausdehnungskoeffizienten von 11,3*10⁻⁶ K⁻¹ auf. Der thermische Ausdehnungskoeffizient des Werkstoffs 1 vor dem Spritzen liegt mit einer geringen Abweichung ebenfalls bei diesem Wert.

Im gespritzten Zustand, in dem der Werkstoff 1 als eine Schicht auf einem Bauteil anhaftet, weist der Werkstoff 1 eine Struktur auf, die derjenigen des Pulverkorns entspricht: In eine Matrix 2 aus Spinell sind Körner 3 aus MgO eingebettet.

Figur 2 zeigt ein Ablaufdiagramm eines Verfahrens zum Herstellen eines im Thermischen Spritzverfahren spritzbaren keramischen Werkstoffs, der einen thermischen Längenausdehnungskoeffizienten von 11*10⁻⁶K⁻¹ aufweist. Im ersten Verfahrensschritt S1 werden die Ausgangsmaterialien der Keramik homogen miteinander zu einer Mischung vermischt. Die in der Figur mit C, A und M bezeichneten Ausgangsmaterialien, die leichte Verunreinigungen enthalten, sind 0,6 Gew.% CaO (C), 22,7 Gew.% Al₂O₃ (A) und 76,5 Gew.% MgO (M).

In einem zweiten Verfahrensschritt S2 werden die Ausgangsmaterialien in einem Lichtbogenofen geschmolzen. Anschließend folgen die Verfahrensschritte S3 des Abkühlens der Schmelze und S4 des Mahlens der erstarrten Masse. Um die Korngröße des durch das Mahlen S4 der erstarrten Masse entstandenen Werkstoffpulvers auf einen vorgegebenen Wert zu bringen, wird das Werkstoffpulver im Verfahrensschritt S5 durch Agglomeration zu größeren Körnern gebunden.

Durch dieses Verfahren wird ein Pulver aus einem keramischen Werkstoff hergestellt, der einen vorgegebenen thermischen Längenausdehnungskoeffizienten von 11,5*10⁻⁶K¹ bei 1000°C aufweist. Durch Variation der Menge an MgO in den Ausgangssubstanzen kann der Längenausdehnungskoeffizient gezielt an den eines metallischen Bauteils angepaßt werden, der mit dem Werkstoff durch ein Verfahren des Thermischen Spritzens beschichtet werden soll.

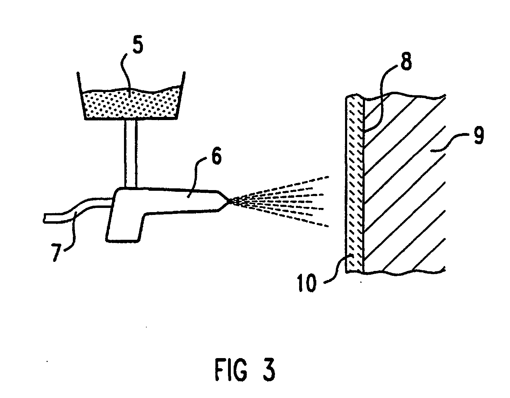

Figur 3 zeigt in stark vereinfachter Darstellung das Spritzen des keramischen Werkstoffs 5 durch das Verfahren des Flammspritzens. Der keramische Werkstoff 5 wird der Spritzpistole 6 in Pulverform zugeführt. Das Pulver des keramischen Werkstoffs 5 wird in der Spritzpistole 6 durch eine Plasmaflamme aufgeschmolzen und durch einen Gasstrom beschleunigt. Das die Plasmaflamme bildende Betriebsgas der Spritzpistole 6 wird der Spritzpistole 6 durch die Leitung 7 zugeführt. Der geschmolzene und beschleunigte Werkstoff 5 wird gegen die zu beschichtende Oberfläche 8 eines metallischen Körpers 9 geschleudert. Die erhitzten Partikel des Werkstoffs 5 treffen auf die Oberfläche 8, auf der sie abkühlen und dadurch an ihr haften bleiben. Es wird dadurch eine Schicht 10 aus dem Werkstoff 5 auf dem Körper 9 gebildet, der ein Bauteil einer Hochtemperatur-Brennstoffzelle ist. Diese Schicht 10 hat durch die geeignete Wahl der Menge an MgO im keramischen Werkstoff 5 denselben thermischen Ausdehnungskoeffizienten wie der metallische Körper 9. Sie haftet daher auch bei starker thermischer Belastung des Körpers 9 dauerhaft an dem metallischen Körper 9.

## Patentansprüche

1. Keramischer Werkstoff (1), der 10 bis 95 Gew.-% MgAl₂O₄, 5 bis 90 Gew.-% MgO, 0 bis 20 Gew.-% Al₂O₃, sowie einen Rest an üblichen Verunreinigungen umfaßt, und der Körner (3) aus MgO mit einem mittleren Durchmesser von 0,1µm bis 10µm aufweist, die in eine Matrix (2) aus spinellförmigem MgAl₂O₄ eingebettet sind.

2. Keramischer Werkstoff (1) nach Anspruch 1, bei dem die eingebetteten Körner (3) aus MgO einen mittleren Durchmesser von 0,1µm bis 2µm aufweisen.

3. Keramischer Werkstoff (1) nach Anspruch 1 oder 2, der 55 bis 80 Gew.-% MgO enthält.

4. Keramischer Werkstoff (1) nach einem der Ansprüche 1 bis 3, der zusätzlich mindestens ein Oxid aus der Gruppe umfaßt, welche CaO, SiO₂, ZrO₂ und Fe₂O₃ enthält.

5. Verfahren zur Herstellung eines keramischen Werkstoffes, bei dem Al₂O₃ und 26 bis 96 Gew.-% MgO als Ausgangsmaterialien zu einer flüssigen Phase aufgeschmolzen (S2) werden, dann die flüssige Phase durch Abkühlung (S3) zum Erstarren gebracht wird, danach die erstarrte Phase zu einem Pulver des keramischen Werkstoffs gemahlen (S4) wird und dann das Pulver durch Agglomeration (S5) der Pulverkörner zu größeren Pulverkörnern geformt wird.

6. Verfahren nach Anspruch 5, bei dem die Ausgangsmaterialien in einem Lichtbogenofen geschmolzen (S2) werden.

7. Verfahren nach Anspruch 5 oder 6, bei dem die Ausgangsmaterialien vor dem Schmelzen (S2) homogen miteinander vermischt (S1) werden.

8. Verwendung des keramischen Werkstoffs (5) nach einem der Ansprüche 1 bis 4 als Spritzpulver für Thermisches Spritzen.

9. Verwendung nach Anspruch 8 zum Beschichten eines Teils eines Werkzeugs aus der Nichteisen-Metallurgie.

10. Verwendung nach Anspruch 8 für das Beschichten der Oberfläche (8) eines Bauteils einer Hochtemperatur-Brennstoffzelle.

11. Den keramischen Werkstoff (5) nach einem der Ansprüche 1 bis 4 umfassende Schicht (10) auf einem metallischen Körper (9), der einen vorgegebenen thermischen Ausdehnungskoeffizienten besitzt, wobei die Menge des MgO im keramischen Werkstoff (5) so gewählt ist, daß der Werkstoff (5) nach der Beschichtung des Körpers (9) denselben thermischen Ausdehnungskoeffizienten besitzt wie der Körper (9).

12. Schicht (10) nach Anspruch 11, wobei der Körper (9) ein Bauteil einer Hochtemperatur-Brennstoffzelle ist.

## Claims

1. Ceramic material (1) which comprises 10 to 95% by weight of MgAl₂O₄, 5 to 90% by weight of MgO, 0 to 20% by weight of Al₂O₃, remainder standard impurities, and which has grains (3) of MgO with a mean diameter of 0.1 µm to 10 µm which are embedded in a matrix (2) of MgAl₂O₄ in spinel form.

2. Ceramic material (1) according to Claim 1, in which the embedded grains (3) of MgO have a mean diameter of 0.1 µm to 2 µm.

3. Ceramic material (1) according to Claim 1 or 2, which contains 55 to 80% by weight of MgO.

4. Ceramic material (1) according to one of Claims 1 to 3, which additionally includes at least one oxide selected from the group consisting of CaO, SiO₂, ZrO₂, and Fe₂O₃.

5. Process for producing a ceramic material, in which Al₂O₃ and 26 to 96% by weight of MgO as starting materials are melted (S2) to form a liquid phase, then the liquid phase is made to solidify by cooling (S3), then the solidified phase is milled (S4) into a powder of the ceramic material, and then the powder is formed into larger powder grains by agglomeration (S5) of the powder grains.

6. Process according to Claim 5, in which the starting materials are melted (S2) in an arc furnace.

7. Process according to Claim 5 or 6, in which the starting materials are homogeneously mixed (S1) with one another prior to the melting (S2).

8. Use of the ceramic material (5) according to one of Claims 1 to 4 as spray powder for thermal spraying.

9. Use according to Claim 8 for coating a part of a tool used in nonferrous metallurgy.

10. Use according to Claim 8 for coating the surface (8) of a component of a high-temperature fuel cell.

11. Layer (10) comprising the ceramic material (5) according to one of Claims 1 to 4 on a metallic body (9) which has a predetermined coefficient of thermal expansion, the quantity of MgO in the ceramic material (5) being selected in such a way that the material (5), after the coating of the body (9), has the same coefficient of thermal expansion as the body (9).

12. Layer (10) according to Claim 11, wherein the body (9) is a component of a high-temperature fuel cell.

## Revendications

1. Matériau (1) céramique, qui contient de 10 à 95 % en poids de MgAl₂O₄, de 5 à 90 % en poids de MgO, de 0 à 20 % en poids d'Al₂O₃, ainsi qu'un reste d'impuretés habituelles, et qui a des grains (3) en MgO ayant un diamètre moyen de 0,1 µm à 10 µm qui sont incorporés dans une matrice (2) en MgAl₂O₄ sous forme de spinelle.

2. Matériau (1) céramique suivant la revendication 1, dans lequel les grains (3) incorporés en MgO ont un diamètre moyen de 0,1 µm à 2 µm.

3. Matériau (1) céramique suivant la revendication 1 ou 2, qui contient de 55 à 80 % en poids de MgO.

4. Matériau (1) céramique suivant l'une des revendications 1 à 3, qui renferme au moins un oxyde du groupe qui comporte CaO, SiO₂, ZrO₂ et Fe₂O₃.

5. Procédé de préparation d'un matériau céramique, dans lequel on fond en une phase liquide de l'Al₂O₃ et de 26 à 96 % en poids de MgO en tant que matière de départ, puis on fait solidifier la phase liquide par refroidissement (S3), et ensuite on broie la phase solidifiée en une poudre du matériau céramique (S4) et ensuite on forme la poudre par agglomération (S5) des grains de poudre en des grains de poudre plus grands.

6. Procédé suivant la revendication 5, dans lequel on fond (S2) les matières de départ dans un four à arc électrique.

7. Procédé suivant la revendication 5 ou 6, dans lequel on mélange entre elles de manière homogène les matières de départ avant la fusion (S2).

8. Utilisation du matériau (5) céramique suivant l'une des revendications 1 à 4, comme poudre de pistolage pour le pistolage thermique.

9. Utilisation suivant la revendication 8, pour revêtir une partie d'un outil dans la métallurgie des non ferreux.

10. Utilisation suivant la revendication 8, pour le revêtement de la surface 8 d'un élément d'une pile à combustible à haute température.

11. Couche (10) comprenant le matériau (5) céramique suivant l'une des revendications 1 à 4, sur un corps (9) métallique qui a un coefficient de dilatation thermique donné à l'avance, la quantité du MgO dans le matériau (5) céramique étant choisie de façon à ce que le matériau (5) ait, après le revêtement du corps (9), le même coefficient de dilatation thermique que le corps (9).

12. Couche (10) suivant la revendication 11, dans lequel le corps (9) est un élément d'une pile à combustible à haute température.
